# EUROPÄISCHE PATENTSCHRIFT

(11) **EP 0 350 616 B1**
(45) Veröffentlichungstag und Bekanntmachung des Hinweises auf die Patenterteilung: **04.08.1993**
(21) Anmeldenummer: 89110201.4
(22) Anmeldetag: 06.06.1989
(51) Int. Cl.: B07B 7/083

(54) **Sichter zum Sichten von körnigem, gegebenenfalls agglomeriertem Gut**
Pneumatic classifier for granular or agglomerated material
Séparateur pneumatique pour matières granuleuses, éventuellement agglomérées

(30) Priorität: 09.07.1988 DE 3823380
(43) Veröffentlichungstag der Anmeldung: 17.01.1990
(73) Patentinhaber: Klöckner-Humboldt-Deutz Aktiengesellschaft, 51149 Köln (DE)
(72) Erfinder: Klingbeil, Lothar, D-5000 Köln 91 (DE)

(56) Entgegenhaltungen:
- EP-A- 0 023 320
- DE-C- 390 584
- GB-A- 424 459
- US-A- 1 962 455
- US-A- 2 988 220
- US-A- 3 015 392

## Beschreibung

Die Erfindung betrifft einen Sichter zum Sichten von körnigem, gegebenenfalls agglomeriertem Gut, mit einem Gehäuse für den Sichtlufteintritt, einem im Gehäuse rotierbar angeordneten Stabkorb mit Turboelementen, mit wenigstens einer im oberen Bereich des Sichters befindlichen Eintrittsöffnung für das zu sichtende Gut und mit einem darunter angeordneten Streuteller, mit einem Grobgutaustrag unterhalb des Stabkorbes und mit einem durch die obere oder untere horizontale Endwand des Stabkorbes geführten Austrag für den mit dem Feingut beladenen Sichtluftstrom.

Man hat in letzter Zeit erhebliche Anstrengungen unternommen, die sehr geringe Energieausnutzung in den Zerkleinerungsmaschinen, insbesondere in den Rohrmühlen zu steigern. So ist eine Einrichtung zur Zerkleinerung und Mahlung spröden Mahlgutes wie z. B. nicht vorzerkleinerter Zementklinker bekannt (EP-B-0 084 383), bei der das Mahlgut zunächst im Spalt einer Walzenpresse unter relativ hohem Druck gepreßt wird, was teils zur Partikelzerstörung, teils zur Erzeugung von Anrissen im Partikelinneren führt und sich sichtbar in der Bildung von Agglomeraten äußert, die dann in der Regel in einer Kugelmühle mit vergleichsweise geringem Energieaufwand zerstört und auf Fertiggutfeinheit gemahlen werden können. Die mit einer hohen Preßkraft betriebene Walzenpresse erzeugt bei der Materialpressung Agglomerate (Schülpen), deren Mahlbarkeit verglichen mit ungepreßtem Material erheblich verbessert ist, so daß die bekannte Zerkleinerung insgesamt zu einer deutlichen Verminderung des spezifischen Energiebedarfs führt. In der Walzenpresse werden die einzelnen Materialpartikel in einem Gutbett, d. h. in einer zwischen zwei Flächen zusammengedrückten Materialschüttung gegenseitig zerquetscht, so daß man hierbei von der sogenannten Gutbettzerkleinerung spricht, die im Spalt der Hochdruck-Walzenpresse realisiert wird.

Bei der bekannten Zerkleinerung wird das Pressenaustragsgut (Schülpen), welches einen relativ hohen Anteil bereits bis zur gewünschten Zementfeinheit reduzierter Partikel aufweisen kann (z. B. 25 % kleiner 32 µm), in der der Walzenpresse nachgeschalteten Kugelmühle desagglomeriert und auf Fertiggutfeinheit gemahlen. Zur Einsparung eines eigenen Desagglomerators ist es aus Fig. 3 der EP-B-0 084 383 bekannt, die Schülpen der Hochdruck-Walzenpresse unmittelbar einem Sichter aufzugeben, in dem die Schülpen desagglomeriert und das desagglomerierte Schülpenmaterial in Feingut und Grobgut gesichtet wird. Ist der dabei verwendete Sichter ein Stabkorbsichter bzw. ein Turbo-Windsichter, wie er z. B. aus der EP-B-0 023 320 bekannt ist und von dem die vorliegende Erfindung ausgeht, so ist die Gefahr nicht ausgeschlossen, daß zumindest die blattförmigen Turboelemente des rotierenden Sichterstabkorbes von den nicht desagglomerierten Schülpen der Hochdruck-Walzenpresse beschädigt werden können.

Ein Desagglomerator-Sichter ist auch aus der US-A-3,015,392 bekannt, der einen auf einem Stabkorb montierten Streuteller aufweist.

Der Erfindung liegt die Aufgabe zugrunde, zum Zwecke der Durchführung der eingangs genannten Gutbettzerkleinerung einen Sichter zu schaffen, in den unter Wegfall eines eigenen Desagglomerators die Desagglomerierung der aus der Walzenpresse ausgetragenen Schülpen betriebssicher und wirkungsvoll integriert ist, ohne daß Beschädigungen des Sichters sowie hohe Investitions- und Betriebskosten in Kauf genommen werden müssen.

Diese Aufgabe wird gemäß der Erfindung mit einem Sichter gelöst, der mit vorteilhaften Ausgestaltungen in den Ansprüchen 1 bis 8 gekennzeichnet ist und insbesondere unabhängige Antrieb für den Schleuderstreuteller und den Stabkorb aufweist.

Beim erfindungsgemäßen Sichter ist im oberen Bereich sozusagen eine Prallzerkleinerungsmaschine integriert, bestehend aus einem das zu sichtende Gut über den Umfang gleichmäßig verteilenden Schleuder-Streuteller als Rotor und aus einem innen am Sichtergehäuse im Umgebungsbereich des Schleuder-Streutellers angeordneten Anwurfring, der mit Vorteil aus einzeln auswechselbaren Segmenten mit Aufprallflächen besteht. Weil nach einem weiteren Merkmal der Erfindung der Schleuder-Streuteller wenigstens zwei mit Abstand übereinander angeordnete Decks aufweisen kann, von denen das obere Deck perforiert und das untere Deck nicht perforiert ist, erfolgt auf dem oberen Deck eine Kornklassierung wie auf einem Sieb, durch dessen Öffnungen das Feinkorn und die in den aufgegebenen Schülpen der vorgeschalteten Rollenpresse enthaltene Feingutfraktion nach unten durchfallen, während die zentral auf das obere Deck des Schleuder-Streutellers aufgegebenen Schülpen beschleunigt und an der Aufprallfläche des Anwurfringes weitestgehend ohne pralldämpfenden Einfluß der Feinkornfraktionen desagglomeriert und gegebenenfalls weiter zerkleinert werden. Dieser Vorteil wird prinzipiell auch dann erreicht, wenn der erfindungsgemäße Sichter einen Schleuder-Streutellerrotor mit nur einem einzigen Deck aufweist. Dabei kann der Schleuder-Streutellerrotor unabhängig vom Stabkorb des Sichters antreibbar sein, wodurch eine optimale Drehzahlanpassung und gute Desagglomerierung unabhängig von der variablen Drehzahl des Stabkorbes gewährleistet ist. Die Aufprallflächen des segmentierten Anwurfringes sollen möglichst senkrecht zur Aufprallrichtung der Gutteilchen vom Schleuder-Streuteller liegen, so daß ein Abgleiten des zu desagglomerierenden bzw. des weiter zu zerkleinernden Gutes in verschiedene Winkelradien soweit wie möglich vermieden wird. Zu diesem Zweck kann die Oberfläche des Anwurfringes profiliert, z. B. gewellt oder mit Vorsprüngen versehen sein, damit das Gut weitestgehend ohne Tangentialbewegungsrichtung senkrecht in den Bereich der Schlagelemente des Schleuder-Streutellerrotors fällt. Insgesamt ist der Einsatz des erfindungsgemäßen Sichters mit integriertem Desagglomerator bzw. integriertem Prallzerkleinerungsaggregat wirtschaftlicher als der Einsatz jeweils eines eigenen Desagglomerators und eigenen Sichters, die einer Gutbettzerkleinerungs-Walzenpresse nachzuschalten sind.

Die Erfindung und deren weitere Merkmale und Vorteile werden anhand der in den Figuren schematisch dargestellten Ausführungsbeispiele näher erläutert. Es zeigt:
- Fig. 1: schematisch einen Vertikalschnitt durch den erfindungsgemäßen Sichter mit integriertem Desagglomerator und
- Fig. 2: im Detail vergrößert den Schleuder-Streuteller des Sichters der Fig. 1.

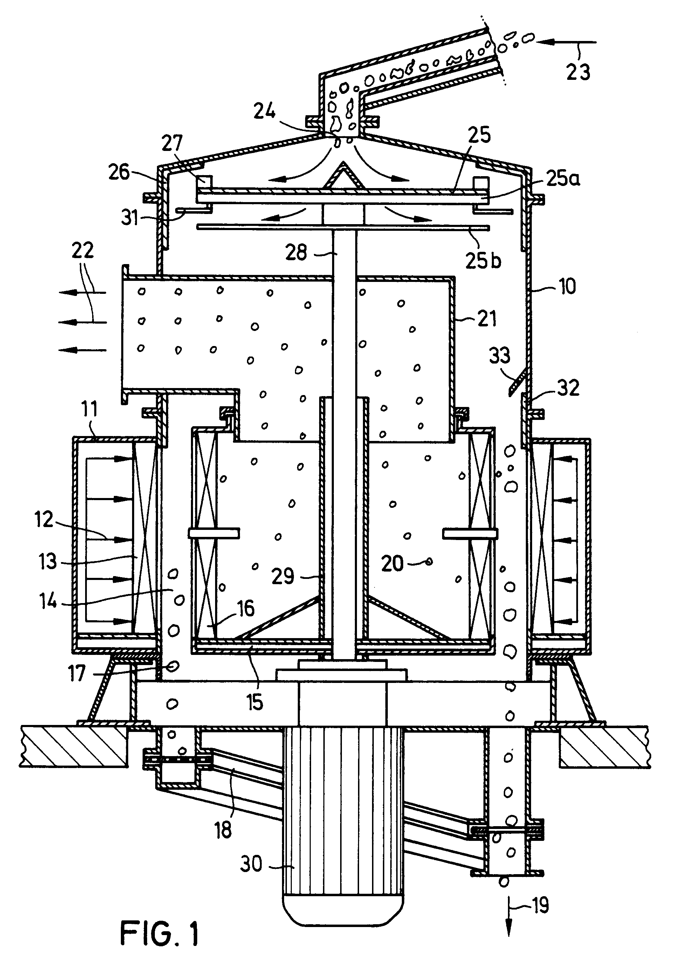

Bei der Gutbettzerkleinerung im Walzenspalt einer Hochdruck-Walzenpresse tritt aus dem Spalt das Gut zerkleinert und teilweise agglomeriert, d. h. zu Schülpen verpreßt aus, deren Anteil an bereits bis zur gewünschten Feinheit reduzierter Partikeln (z. B. 25 % kleiner 32 µm) relativ hoch sein kann. Solche Schülpen müssen desagglomeriert, d. h. aufgelöst und der darin enthaltene Grobgutanteil in der Regel weiter zerkleinert werden. Die Schülpen können erfindungsgemäß in einem einzigen Aggregat, nämlich im Sichter der Fig. 1 desagglomeriert, gegebenenfalls weiter zerkleinert und in Feingut und Grobgut gesichtet werden.

Der Sichter (10) mit zylindrischem Oberteil weist ein Gehäuse, z. B. Spiralgehäuse (11) auf, durch welches die Sichtluft (12) zwischen über den Umfang verteilte Leitelemente (13) hindurch in die ringkanalförmige Sichtzone (14) und in den im Spiralgehäuse rotierbar angeordneten Sichterrotor bzw. Stabkorb (15) einströmt, der an seinem Umfang blattförmige Turboelemente (16) trägt und nach unten durch einen luftundurchlässigen Boden abgeschlossen ist. Während im ringkanalförmigen Sichtraum (14) das Grobgut (17) nach unten fällt und über eine schräg angeordnete pneumatische Förderrinne (18) zum Grobgutaustrag (19) transportiert wird, wird das Feingut (20) vom Sichtluftstrom (12) mitgenommen und mit diesem über ein auf den Stabkorb (15) aufgesetztes nicht mitrotierendes Feingutaustragsgehäuse (21) aus dem Sichter abgezogen, wie durch Pfeile (22) angezeigt.

Das Aufgabegut (23), nämlich die Schülpen der dem Sichter (10) vorgeschalteten Hochdruck-Walzenpresse und gegebenenfalls Material aus einem oder mehreren Zerkleinerungsaggregaten werden über eine zentral an der Sichteroberseite angeordnete Eintrittsöffnung (24) zentrisch auf einen Schleuder-Streuteller (25) geleitet, der im Ausführungsbeispiel nach Fig. 1 erfindungsgemäß zwei mit Abstand übereinander angeordnete Decks aufweist, von denen das obere Deck (25a) perforiert und das untere Deck (25b) nicht perforiert ist. Innen am Sichtergehäuse ist im Umgebungsbereich der Streutellerdecks (25a, 25b) ein aus Segmenten zusammengesetzter Anwurfring (26) angeordnet. Durch den Siebeffekt des oberen Decks (25a) wird aus dem agglomerathaltigen Aufgabegut (23) bereits wenigstens ein Teil des im Aufgabegut enthaltenen Feingutes herausgenommen, welches durch die Perforierungen hindurch auf das untere Deck (25b) fällt. Daher werden erfindungsgemäß die Schülpen des Aufgabegutes (23) auf dem oberen Deck (25a) weitestgehend beschleunigt und an den Aufprallflächen des Anwurfringes (26) wirkungsvoll desagglomeriert und gegebenenfalls weiter zerkleinert, wie in einer Prallzerkleinerungsmaschine. Zur Verstärkung dieses Effektes können an der Peripherie des oberen Decks (25a) des das Aufgabegut gleichmäßig über den Umfang verteilenden Streutellers mitrotierende über den Umfang verteilte Schlagelemente (27) bzw. Beschleunigungselemente befestigt sein. Um die Aufprallwucht des Aufgabegutes am Anwurfring (26) zu vergrößern und ein Abgleiten des Gutes in verschiedene Winkelradien soweit wie möglich zu vermeiden, ist die Oberfläche des Anwurfringes (26) mit Vorteil profiliert, d. h. mit Wellungen, Vorsprüngen oder dergleichen versehen.

Der Schleuder-Streuteller (25) mit seinen Decks steht mit einer vertikalen Antriebswelle (28) und der Stabkorb (15) steht mit einer konzentrisch dazu angeordneten Hohlwelle (29) in Verbindung, wobei nach dem Ausführungsbeispiel der Fig. 1 beide Wellen von einem unterhalb des Stabkorbes angeordneten Antriebsmotor (30) angetrieben sind. Mit Vorteil erfolgt der Antrieb des Schleuder-Streutellers (25) unabhängig vom Antrieb des Stabkorbes (15), z. B. über Keilriementrieb. So kann der Streuteller z. B. mit einer höheren Drehzahl rotieren als der Stabkorb. Dadurch ist eine optimale Drehzahlanpassung und gute Desagglomerierung des Aufgabegutes gewährleistet, und zwar unabhängig von der ihrerseits variablen Drehzahl des Stabkorbes (15). Es wäre auch möglich, den Stabkorb (15) von unten her und den Schleuder-Streutellerrotor (25) von oben her anzutreiben. Außerdem besteht die Möglichkeit, Stabkorb und Streutellerrotor starr miteinander zu verbinden.

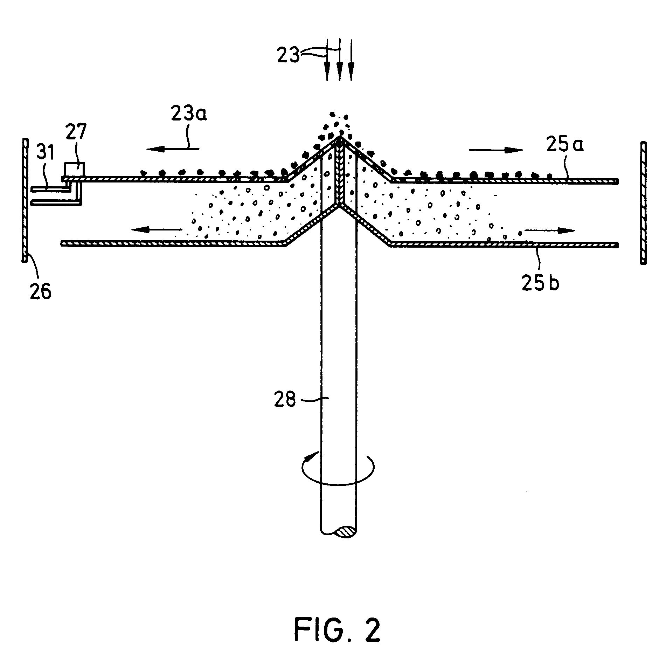

Wie aus der Detailzeichnung der Fig. 2 besonders hervorgeht, können unterhalb des Außenrandes des oberen Decks (25a) des Streutellers (25) radial nach außen vorspringende Schlagelemente (31) starr oder frei pendelnd wie bei einem Hammerbrecher befestigt sein. Nach dem Ausführungsbeispiel der Fig. 2 sind solche Schlagelemente (31) auf zwei Niveauebenen angeordnet. Weil die Schlagelemente (31) unterhalb des jeweiligen Decks des Schleudertellers angeordnet sind, ist es möglich, das an die Aufprallflächen des Anwurfrings (26) geschleuderte und von diesem senkrecht nach unten herabfallende Gut mit den Schlagelementen (31) zu erfassen und mit diesen weiter zu zerkleinern. Insbesondere frei pendelnde Schlagelemente (31) haben den weiteren Vorteil der leichten Austauschbarkeit. Die hohe Rotationsgeschwindigkeit des Streutellers (25) ergibt selbst für Schlagelemente (31) mit geringen Massen ein hohes Energiepotential zur Zerkleinerung des Aufgabegutes. Auch am Umfang des Stabkorbes (15) können Schlagelemente befestigt sein, die in Fig. 1 nicht eingezeichnet sind; dagegen sind in Fig. 1 die mit solchen Schlagelementen zusammenwirkenden zusätzlichen Aufprallflächen (32) des Sichters (10) eingezeichnet. Dabei wird das Gut mit Vorteil durch Leitbleche (33) konzentriert in den Schlagkreis geleitet. Für diesen Anordnungsfall der Schlagelemente kann die Drehrichtung von Streuteller (25) und Stabkorb (15) vorteilhafterweise gegebenenfalls entgegengesetzt sein, um entgegengesetzte Flugbahnen von Gut und Schlagelemente zu bewirken.

Wie aus Fig. 2 noch hervorgeht, weisen die Decks (25a, 25b) des Steutellers (25) im zentralen Bereich eine nach oben zentrisch vorspringende Kegelfläche auf, um eine noch bessere Desagglomerierung und Klassierung des Aufgabegutes (23) insbesondere auf dem oberen perforierten Deck (25a) des Streutellers zu erzielen. Schematisch ist eingezeichnet, wie die Schülpen (23a) des Aufgabegutes (23) radial nach außen in Richtung zu den Prallflächen des Anwurfringes (26) geschleudert werden, während das im Aufgabegut (23) enthaltene Feingut durch die Sieböffnungen des oberen Decks (25a) nach unten auf das untere Deck (25b) fallen, von wo dieses Gutmaterial ebenfalls an die Peripherie gebracht wird und letztendlich ebenfalls dem ringkanalförmigen Sichtraum (14) des Sichters zugeleitet wird. Der Grobgutaustrag (19) des erfindungsgemäßen Sichters kann zu einer nachgeschalteten Kugelmühle transportiert und/oder zur dem Sichter (10) vorgeschalteten Hochdruck-Walzenpresse rezirkuliert werden. Die letztgenannte Möglichkeit der Rezirkulierung des Sichtergrobgutes zur Hochdruck-Walzenpresse kann auch dazu dienen, im Aufgabegutbehälter der Walzenpresse eine konstante Gutschütthöhe aufrechtzuerhalten.

Bei der Beschickung des erfindungsgemäßen Sichters (10) mit dem zu behandelnden Gut besteht auch die Möglichkeit, auf das obere Deck (25a) des Schleuder-Streutellers nur die Schülpen der vorgeschalteten Hochdruck-Walzenpresse und auf das untere Deck (26b) oder noch weiter unten, gegebenenfalls in Höhe des Stabkorbs (15), z. B. über eine den Sichterumfang umgebende Fließbettrinne, nur die Grieße bzw. das nicht mehr zu desagglomerierende Austragsgut einer nachgeschalteten Kugelmühle, aufzugeben.

## Patentansprüche

1. Sichter zum Sichten von körnigem, insbesondere agglomeriertem Gut, mit einem Gehäuse für den Sichtlufteintritt, einem im Gehäuse rotierbar angeordneten Stabkorb (15) mit Turboelementen (16), mit wenigstens einer im oberen Bereich des Sichters befindlichen Eintrittsöffnung (24) für das zu sichtende Gut und mit einem Schleuder-Streuteller (25), in dessen Umgebungsbereich innen am Sichtergehäuse ein Anwurfring (26) mit Aufprallfläche angeordnet ist, und mit einem Grobgutaustrag unterhalb des Stabkorbes (15) und einem Austrag für den mit dem Feingut beladenen Sichtluftstrom (22), dadurch gekennzeichnet, daß der oberhalb des Stabkorbs (15) angeordnete Schleuder-Streuteller (25) unabhängig vom Antrieb des Stabkorbs (15) und unabhängig von dessen Drehzahl angetrieben ist.

2. Sichter nach Anspruch 1, dadurch gekennzeichnet, daß der Schleuder-Streuteller (25) über eine vertikale Antriebswelle (28) und der Stabkorb (15) über eine konzentrisch dazu angeordnete Hohlwelle (29) angetrieben sind.

3. Sichter nach Anspruch 1 oder 2, dadurch gekennzeichnet, daß die Drehrichtung des Drehantriebes für den Stabkorb (15) entgegengesetzt ist zur Drehrichtung des Drehantriebes für den Schleuder-Streuteller (25).

4. Sichter nach Anspruch 1, dadurch gekennzeichnet, daß für den Austrag des mit Feingut beladenen Sichtluftstromes (22) ein Austragsgehäuse (21) vorgesehen ist, welches auf den Stabkorb (15) aufgesetzt und mit diesem nicht mitrotierend im Sichter mit Abstand unterhalb des Schleuder-Streuteller (25) feststehend angeordnet ist.

5. Sichter nach Anspruch 1, dadurch gekennzeichnet, daß das Deck (25a) des Schleuder-Streutellers (25) perforiert ist und daß unterhalb des Decks (25a) gegebenenfalls ein weiteres Deck (25b) angeordnet ist, das nicht perforiert ist.

6. Sichter nach Anspruch 5, dadurch gekennzeichnet, daß an der Peripherie des oberen Decks (25a) des Schleuder-Streutellers (25) mitrotierende Schlagelemente (27) bzw. Beschleunigungselemente angeordnet sind.

7. Sichter nach Anspruch 5 oder 6, dadurch gekennzeichnet, daß unterhalb des Außenrandes des oberen oder des gegebenenfalls vorhandenen unteren Decks des Streutellers (25) radial nach außen vorspringende Schlagelemente (31) starr oder frei pendelnd befestigt sind.

8. Sichter nach einem oder mehreren der Ansprüche 5 bis 7, dadurch gekennzeichnet, daß die Decks des Streutellers (25) im zentralen Bereich eine nach oben zentrisch vorspringende Kegelfläche aufweisen.

## Claims

1. A separator for separating granular, more especially agglomerated, material, comprising a casing for entry of separating air, a cage (15) and turbo-elements (16) rotatably disposed in the casing, at least one opening (24) in the upper region of the separator for entry of material to be separated, a centrifugal scattering plate (25) having a peripheral region inside the separator casing where a starting ring (26) and baffle surface are disposed, an outlet for coarse material underneath the cage (15) and an outlet for the stream (22) of separating air loaded withh fine material, characterised in that the centrifugal scattering plate (25) disposed above the cage (15) is driven independently of the cage drive and independently of the speed thereof.

2. A separator according to claim 1, characterised in that the centrifugal scattering plate (25) is driven via a vertical drive shaft (28) and the cage (15) is driven via a hollow shaft (29) concentric with the drive shaft.

3. A separator according to claim 1 or 2, characterised in that the direction of rotation for the drive of the cage (15) is opposite to the direction of rotation of the drive for the centrifugal scattering plate (25).

4. A separator according to claim 1, characterised in that a discharge casing (21) for discharging the stream (22) of separating air loaded with fine material is provided and is disposed on the cage (15) and, by means thereof, is non-rotatably secured in the separator at a distance below the centrifugal scattering plate (25).

5. A separator according to claim 1, characterised in that the deck (25a) of the centrifugal separating plate (25) is perforated and a second unperforated deck (25b) is optionally disposed under the deck (25a).

6. A separator according to claim 5, characterised in that impact elements (27) or accelerating elements are disposed on the periphery of the upper deck (25a) of the centrifugal scattering plate (25) and rotate therewith.

7. A separator according to claim 5 or 6, characterised in that radially outwardly projecting impact elements (31) are rigidly secured or freely suspended underneath the outer edge of the upper deck of the scattering plate (25) or the lower deck if present.

8. A separator according to one or more of claims 5 to 7, characterised in that the decks of the scattering plate (25) have a central upwardly projecting conical surface in their central region.

## Revendications

1. Séparateur pneumatique pour la séparation de matières granuleuses, notamment de matières agglomérées, avec un carter pour l'entrée de l'air de séparation, avec une corbeille à barreaux (15) disposée de façon à pouvoir tourner dans le carter et munie de turbo-éléments (16), avec au moins une ouverture d'entrée (24), se trouvant dans la zone supérieure du séparateur, pour le produit à séparer et avec une sole de dispersion centrifuge (25) dans l'environnement de laquelle un anneau de projection (26) comportant des surfaces d'impact est disposé à l'intérieur sur le carter du séparateur, et avec une sortie de produit grossier au-dessous de la corbeille à barreaux (15) et une sortie pour le courant d'air de séparation (22) chargé par le produit fin, séparateur caractérisé en ce que la sole de dispersion centrifuge (25) disposée au-dessus de la corbeille à barreaux (15) est entraînée indépendamment de l'entraînement de la corbeille à barreaux (15) et indépendamment de la vitesse de rotation de cette dernière.

2. Séparateur selon la revendication 1, caractérisé en ce que la sole de dispersion centrifuge (25) est entraînée par l'intermédiaire d'un arbre vertical (28) d'entraînement, tandis que la corbeille à barreaux (15) est entraînée par l'intermédiaire d'un arbre creux (29) disposé concentriquement à cet arbre vertical d'entraînement.

3. Séparateur selon la revendication 1 ou la revendication 2, caractérisé en ce que le sens de rotation de l'entraînement en rotation pour la corbeille à barreaux (15) est opposé au sens de rotation de l'entraînement en rotation pour la sole de dispersion centrifuge (25).

4. Séparateur selon la revendication 1, caractérisé en ce que pour la sortie du courant d'air de séparation (22) chargé de produit fin, est prévu un carter de sortie (21) qui, placé sur la corbeille à barreaux (15) et non entraîné en rotation par celle-ci, est disposé dans le séparateur à une certaine distance au-dessous de la sole de dispersion centrifuge (25).

5. Séparateur selon la revendication 1, caractérisé en ce que l'étage (25a) de la sole de dispersion centrifuge (25) est perforé et qu'au-dessous de l'étage (25a) il est éventuellement prévu un autre égage (25b) qui n'est pas perforé.

6. Séparateur selon la revendication 5, caractérisé en ce que, à la périphérie de l'étage supérieur (25a) de la sole de dispersion centrifuge (25), sont disposés des éléments de percussion (27) ou bien des éléments d'accélération tournant avec cette sole.

7. Séparateur selon la revendication 5 ou la revendicatio,n 6, caractérisé en ce qu'au-dessous du bord externe de l'étage supérieur ou bien de l'étage inférieur éventuellement prévu de la soie de dispersion (25), des éléments de percussion (31) faisant radialement vers l'extérieur sont fixés de façon rigide ou bien de façon à osciller librement.

8. Séparateur selon une ou plusieurs des revendications 5 à 7, caractérisé en ce que les planchers de la sole de distribution (25) comportent dans leur zone centrale, une surface conique faisant centralement saillie vers le haut.
